# EUROPEAN PATENT SPECIFICATION

(11) **EP 4 427 895 B1**
(45) Date of publication and mention of the grant of the patent: **10.12.2025**
(21) Application number: 23167658.6
(22) Date of filing: 13.04.2023
(51) Int. Cl.: B28B 1/00, E04G 21/04, E01C 19/48

(54) **3D PRINTING CONSTRUCTION APPARATUS AND CONSTRUCTION METHOD**
3D-DRUCK-KONSTRUKTIONSVORRICHTUNG UND KONSTRUKTIONSVERFAHREN
APPAREIL DE CONSTRUCTION D'IMPRESSION 3D ET PROCÉDÉ DE CONSTRUCTION

(30) Priority: 08.03.2023 CN 202310223457
(43) Date of publication of application: 11.09.2024
(73) Proprietor: China Three Gorges Corporation, Wuhan, Hubei 430010 (CN); China Three Gorges Construction Engineering Corporation, Beijing 101199 (CN)
(72) Inventor: TAN, Zhiguo, Wuhan, 430010 (CN); GAO, Peng, Wuhan, 430010 (CN); ZHOU, Shaowu, Wuhan, 430010 (CN); DU, Jianguo, Wuhan, 4300010 (CN); CHEN, Xiang, Wuhan, 430010 (CN); ZHAO, Qiang, Wuhan, 430010 (CN); LI, Xin, Wuhan, 430010 (CN)
(74) Representative: Valet Patent Services Limited

(56) References cited:
- EP-A1- 2 886 277
- CN-A- 113 478 606
- CN-B- 113 389 112
- JP-A- 2018 199 939

## Description

### TECHNICAL FIELD

The disclosure relates to the technical field of 3D printing, in particular to a 3D printing construction apparatus and a construction method.

### BACKGROUND

A 3D printing technology is in a rapid development stage, and various 3D printing devices are emerging in an endless stream. 3D printing is rapidly promoted and used in all industries of production and manufacturing with its fast and efficient characteristics and an ability to easily manufacture some complex structures. 3D printing has the advantage of convenient molding, and an accuracy of a three-dimensional structure is guaranteed. In the construction industry, the 3D printing technology is also used for model casting and overall manufacturing.

In an existing 3D printing device, performances and flow rates of concrete flowing out during printing are the same, resulting in inability to print complex structures and buildings formed by combining different concrete performances, thereby affecting the scope and effect of application.

EP2886277A discloses an apparatus for performing a multi-layer construction method using cementitious material. The apparatus has a reservoir for containing cementitious material. The reservoir is coupled to a print head with a delivery nozzle. The delivery nozzle can be moved by a robotic arm assembly to index the nozzle along a predetermined path. Flow of the cementitious material from the reservoir to the nozzle and to extrude the material out of the nozzle is controlled in conjunction with indexing of the nozzle.

CN113389112B relates to cement concrete pavement 3D printing equipment and a construction method, and belongs to the technical field of pavement paving. The equipment comprises a vehicle-mounted system, a batching system, a control system, a printing system and a leveling system. The batching system is arranged on the vehicle-mounted system, the batching system is connected with the printing system, the control system is arranged in the printing system, concrete is laid on a road surface through the printing system and the control system, and the leveling system is arranged on the printing system; and the concrete-laid road surface is leveled through the leveling system.

### SUMMARY

Therefore, the technical problem to be solved by the present disclosure is to overcome the defect that performances and flow rates of concrete flowing out of a 3D printing device in the prior art are the same, which cannot print complex structures and buildings formed by combining different concrete performances, so that a 3D printing construction apparatus and a construction method are provided.

In order to solve the above problem, the present disclosure provides a 3D printing construction apparatus according to claim 1, the apparatus including:
an operation structure, including a control room, a controller being arranged in the control room;
a printing arm structure, arranged on one side of the control room, the printing arm structure including a printing arm and a feed delivery pipe, and the feed delivery pipe being suitable for flowing of concrete or slurry; and
a printing arm head structure, arranged at one end of the printing arm structure away from the control room, the printing arm head structure including an arm head and a first rotating power part, wherein the first rotating power part is in communication connection with the controller, a grouting nozzle and a concrete printing nozzle are arranged at two opposite ends of the arm head, diameters of the grouting nozzle and the concrete printing nozzle are different, and the first rotating power part drives the arm head to rotate, so as to drive the grouting nozzle or the concrete printing nozzle to be in pipeline connection with the feed delivery pipe.

Optionally, a proximity switch is arranged on the arm head, the proximity switch is in communication connection with the controller, and the proximity switch is configured to determine a rotation position of the arm head.

Optionally, the first rotating power part is fixedly provided with a rotating end, the arm head is provided with a force bearing end, a transmission belt is arranged between the rotating end and the force bearing end, and the rotating end rotates to drive the arm head to rotate.

Optionally, the printing arm includes at least two rotating joints, a second rotating power part is arranged between the rotating joints, and the second rotating power part is in communication connection with the controller.

Optionally, the 3D printing construction apparatus further includes a trailer, the trailer is arranged at one end of the control room facing away from the printing arm, the trailer is provided with a trailer body, a delivery pump, a concrete tank, a mortar tank, a sequencing valve, an admixture tank, a water tank, a hydraulic control valve and a liquid delivery pump are arranged in the trailer body, the delivery pump is in pipeline connection with the feed delivery pipe, the delivery pump, the sequencing valve, the hydraulic control valve and the liquid delivery pump are in signal connection with the controller respectively, the concrete tank is in pipeline connection with the sequencing valve through a concrete pipe, the mortar tank is in pipeline connection with the sequencing valve through a grouting pipe, the sequencing valve is in pipeline connection with the delivery pump, an output end of the delivery pump is connected with the feed delivery pipe, the admixture tank and the water tank are connected with the hydraulic control valve respectively through pipelines, the hydraulic control valve is in pipeline connection with the liquid delivery pump, and the liquid delivery pump is connected with a nozzle through a liquid delivery pipe.

Optionally, a walking structure is arranged below the control room, and the control room is rotatably connected with the walking structure.

Optionally, the 3D printing construction apparatus further includes a stirring pipe arranged close to the arm head and connected with the feed delivery pipe, wherein a driving structure, a stirring paddle and a stirring shaft are arranged in the stirring pipe, two ends of the stirring shaft are connected with the stirring pipe through supporting of support frames, the driving structure drives the stirring shaft to stir, one end of the stirring pipe facing away from the arm head is connected with a liquid delivery pipe, the liquid delivery pipe is suitable for flowing of water or an additive, the stirring pipe is fixed to the printing arm structure through a fixing pier, a feeding pipe is arranged in an arm head cavity of the arm head, the feed delivery pipe is arranged between the feeding pipe and the stirring pipe, a flexible joint of the feeding pipe is movably connected with an arm head feeding channel, such that the concrete or mortar enters the nozzle for concrete printing or grouting through the arm head feeding channel, the feeding pipe is fixedly connected with a rotating arm front section, the feeding pipe is connected with an arm head bearing in a sleeving mode, the force bearing end and the feeding pipe are arranged correspondingly, and each of the grouting nozzle or the concrete printing nozzle is provided with a nozzle opening and closing part.

Optionally, the 3D printing construction apparatus further includes a hoisting structure, the hoisting structure includes a lifting hook, a wire rope and a winch, the lifting hook is arranged below the rotating joint of the printing arm close to the arm head, the winch is arranged below the rotating joint of the printing arm close to the control room, the wire rope is connected between the lifting hook and the winch, and the winch is in communication connection with the controller.

Optionally, the 3D printing construction apparatus further includes a camera structure, the camera structure includes a camera, the camera is arranged below the rotating joint of the printing arm close to the arm head, and the camera is in communication connection with the controller.

In a construction method of a 3D printing construction apparatus, when a rapid molding structure and a component need to be printed, a first rotating power part drives an arm head to rotate, a concrete printing nozzle is in pipeline connection with a feed delivery pipe, concrete flows through the feed delivery pipe, such that the concrete printing nozzle sprays the concrete to complete printing of the molding structure and the component; and when slurry needs to be grouted and filled, the first rotating power part drives the arm head to rotate, a grouting nozzle is in pipeline connection with the feed delivery pipe, and the slurry flows through the feed delivery pipe, such that the grouting nozzle sprays the slurry to complete printing of slurry grouting and filling occasions.

A construction method of a 3D printing construction apparatus according to claim 10 includes the following steps:
1) printing of a concrete outer ring layer, specifically, operating a rotary platform of a printing arm structure to rotate, so as to switch to a concrete printing nozzle, such that the concrete printing nozzle rotates downwards, and opening one or a plurality of nozzle opening and closing parts according to a printing width and thickness; and
   injecting concrete in a concrete tank into a delivery pump for delivery through a feed delivery pipe, wherein a pipeline passes through a pipeline and line outlet of the rotary platform to deliver the concrete to the concrete printing nozzle along a printing arm for outer ring printing of an anti-collision pier, a built-in program of a controller selects a type and a mix proportion of the concrete to be printed, the built-in program controls a rotating speed of a stirring paddle in a stirring pipe, at the same time, a type and the spray quantity of a liquid sprayed by a nozzle are controlled through a water control valve, the nozzle sprays water or an additive, and then the water or the additive is stirred and mixed by the stirring paddle to prepare concrete to be printed, and at the same time, the nozzle is arranged at one end of the stirring pipe away from the arm head, so that the stirring paddle fully stirs the concrete to be printed after adding the liquid, a driving part of a driving structure drives the stirring paddle to rotate, a planetary gear is arranged on the driving part, a disc gear engaged with the planetary gear is arranged on a stirring shaft, support frames are arranged at two ends, arranged along an axis, of the stirring shaft respectively, the support frames are of arc structures, support bearings are arranged between the support frames and the stirring shaft, when a printing path needs to be adjusted in a different direction, the controller controls a rotating power part to adjust a direction of the printing nozzle, so as to adjust the printing path;
(2) putting a stone wire mesh bag, driving, by the rotary platform, the printing arm to rotate, hoisting the stone wire mesh bag by a lifting hook, putting into the anti-collision pier, and grouting after filling a layer; and
(3) pressurizing by the stone wire mesh bag for grouting, and controlling, by the controller, a first rotating power part to switch to a grouting nozzle for grouting, wherein a feeding pipe is in butt-joint with the grouting nozzle for grouting, the grouting nozzle is made of a flexible metal pipe, after a layer of stones is filled, the grouting nozzle is extended into a gap formed by the stones, a camera observes a grouting effect to stop grouting or adjusting a grouting position, and after a layer of grouting is completed, a second layer of stones is hoisted, so as to complete printing by multi-layer hoisting and layered grouting.

The technical solution of the present disclosure has the following advantages.

The 3D printing construction apparatus provided by the present invention includes: the operation structure, including the control room, the controller being arranged in the control room; the printing arm structure, arranged on the side of the control room and including the printing arm and the feed delivery pipe, the feed delivery pipe being suitable for flowing of the concrete or the slurry; and the printing arm head structure, arranged at the end of the printing arm structure away from the control room and including the arm head and the first rotating power part, wherein the first rotating power part is in communication connection with the controller, the grouting nozzle and the concrete printing nozzle are arranged at the two opposite ends of the arm head, the diameters of the grouting nozzle and the concrete printing nozzle are different, and the first rotating power part drives the arm head to rotate, so as to drive the grouting nozzle or the concrete printing nozzle to be in pipeline connection with the feed delivery pipe. When the rapid molding structure and the component need to be printed, the first rotating power part drives the arm head to rotate, the concrete printing nozzle is in pipeline connection with the feed delivery pipe, the concrete flows through the feed delivery pipe, such that the concrete printing nozzle sprays the concrete to complete printing of the molding structure and the component; and when the slurry needs to be grouted and filled, the first rotating power part drives the arm head to rotate, the grouting nozzle is in pipeline connection with the feed delivery pipe, and the slurry flows through the feed delivery pipe, such that the grouting nozzle sprays the slurry to complete printing of slurry grouting and filling occasions. Therefore, the problem that the concrete with different performances and flow rates cannot flow out of the 3D printing device is solved, and the complex structures and buildings formed by combining different concrete performances can be printed, so as to adapt to different printing occasions, and facilitate rapid printing of building models of different sizes.

Preferably, the proximity switch is arranged at the arm head, the proximity switch is in communication connection with the controller, and is configured to determine the rotation position of the arm head, and rotation of the arm head is controlled by the proximity switch to realize positioning of the arm head.

According to a preferred embodiment, the first rotating power part is fixedly provided with the rotating end, the arm head is provided with the force bearing end, a rotating belt is arranged between the rotating end and the force bearing end, the rotating end rotates to drive the arm head to rotate, the rotating belt is driven by the rotating end, and the force bearing end is driven by the rotating belt to rotate, so that rotation of the arm head is realized to drive the concrete printing nozzle or the grouting nozzle to be in pipeline connection with the feed delivery pipe.

Preferably, the printing arm includes the at least two rotating joints, the second rotating power part is arranged between the rotating joints, the second rotating power part is in communication connection with the controller, and the second rotating power part is controlled by the controller to drive the adjacent rotating joints to rotate relatively.

Preferably, the trailer is arranged at the end of the control room facing away from the printing arm, the trailer is provided with the trailer body, the delivery pump, the concrete tank, the mortar tank, the sequencing valve, the admixture tank, the water tank, the hydraulic control valve and the liquid delivery pump are arranged in the trailer body, the delivery pump is in pipeline connection with the feed delivery pipe, the delivery pump, the sequencing valve, the hydraulic control valve and the liquid delivery pump are in signal connection with the controller respectively, the concrete tank is in pipeline connection with the sequencing valve through the concrete pipe, the mortar tank is in pipeline connection with the sequencing valve through the grouting pipe, the sequencing valve is in pipeline connection with the delivery pump, the output end of the delivery pump is connected with the feed delivery pipe, the admixture tank and the water tank are connected with the hydraulic control valve respectively through the pipelines, the sequencing valve is in pipeline connection with the liquid delivery pump, and the liquid delivery pump is connected with the nozzle through the liquid delivery pipe.

Preferably, the walking structure is arranged below the control room, the control room is rotatably connected with the walking structure, and the walking structure moves forward or backward, and then turns an angle of the control room after reaching a predetermined position.

In a preferred embodiment, the 3D printing construction apparatus further includes the stirring pipe arranged close to the arm head and connected with the feed delivery pipe, the driving structure, the stirring paddle and the stirring shaft are arranged in the stirring pipe, the two ends of the stirring shaft are connected with the feed delivery pipe through supporting of the support frames, the driving structure drives the stirring shaft to stir, the end of the stirring pipe facing away from the arm head is connected with the liquid delivery pipe, and the liquid delivery pipe is suitable for flowing of the water or the additive, so that the water or the additive in the liquid delivery pipe enters the stirring pipe to form different performances. The stirring pipe is fixed to the printing arm structure through the fixing pier, the feeding pipe is arranged in the arm head cavity of the arm head, the feed delivery pipe is arranged between the feeding pipe and the stirring pipe, the flexible joint of the feeding pipe is movably connected with the arm head feeding channel, such that the concrete or mortar enters the nozzle for concrete printing or grouting through the arm head feeding channel, the feeding pipe is fixedly connected with the rotating arm front section, the feeding pipe is connected with the arm head bearing in the sleeving mode, the force bearing end and the feeding pipe are arranged correspondingly, each of the grouting nozzle or the concrete printing nozzle is provided with the nozzle opening and closing part, and the grouting nozzle or the concrete printing nozzle is opened or closed by the nozzle opening and closing part to form a 3D printing model with a required width or thickness.

Preferably, the 3D printing construction apparatus further includes the hoisting structure, the hoisting structure includes the lifting hook, the wire rope and the winch, the lifting hook is arranged below the rotating joint of the printing arm close to the arm head, the winch is arranged below the rotating joint of the printing arm close to the control room, the wire rope is connected between the lifting hook and the winch, the winch is in communication connection with the controller, and the winch structure may hoist consumables and other items needed for printing the concrete model.

Preferably, the 3D printing construction apparatus further includes the camera structure, the camera structure includes the camera, the camera is arranged below the rotating joint of the printing arm close to the arm head, and the camera is in communication connection with the controller, so as to transmit a captured image to the control room in real time.

### BRIEF DESCRIPTION OF THE DRAWINGS

In order to explain specific implementations of the present disclosure or technical solutions in the prior art more clearly, the following will briefly introduce accompanying drawings that need to be used in the description of the specific implementations or the prior art. Obviously, the accompanying drawings in the following description are some implementations of the present disclosure. For those skilled in the art, other accompanying drawings may further be obtained based on these accompanying drawings without creative efforts.
Fig. 1 is a front view of a 3D printing construction apparatus provided in an implementation of the present disclosure.
Fig. 2 is a top view of a 3D printing construction apparatus provided in an implementation of the present disclosure.
Fig. 3 is an enlarged schematic diagram in a direction A shown in Fig. 1.
Fig. 4 is a schematic structural diagram of a rotating joint provided in an implementation of the present disclosure.
Fig. 5 is a schematic structural diagram of a rotating joint provided in an implementation of the present disclosure.
Fig. 6 is a schematic structural diagram of a 3D printing construction apparatus provided in an implementation of the present disclosure.
Fig. 7 is a schematic structural diagram of a stirring pipe provided in an implementation of the present disclosure.
Fig. 8 is a schematic diagram of a hoisting function provided in an implementation of the present disclosure.

Description of reference numerals: 1. Printing arm structure; 2. Wire rope; 3. Winch; 4. Walking structure; 5. Rotary platform; 51. Cable hole; 52. Active driving gear; 53. Power shaft; 54. Rotary power part; 6. Feed delivery pipe; 61. Concrete pipe; 62. Grouting pipe; 63. Liquid delivery pipe; 7. Trailer rod; 8. Trailer; 9. Stone wire mesh bag; 10. Control room; 11. Power mechanism; 101. Controller; 12. Delivery pump; 13. Sequencing valve; 14. Concrete tank; 141. Mortar tank; 15. Trailer body; 16. Arm head; 161. Grouting nozzle; 162. Concrete printing nozzle; 163. Belt; 164. Force bearing end; 165. Arm head bearing; 17. First rotating power part; 171. Rotating end; 18. Camera; 19. Lifting hook; 20. Rotating joint; 201. Rotating arm front section; 202. Rotating arm rear section; 21. Second rotating power part; 211. Motor seat; 212. Motor shaft; 22. Printing model; 801. Arm head cavity; 802. Feeding pipe; 803. Flexible joint; 804. Nozzle opening and closing part; 805. Arm head feeding channel; 806. Rotating power part; 91. Stirring pipe; 92. Driving structure; 921. Driving part; 922. Disc gear; 923. Planetary gear; 931. Nozzle; 932. Water control valve; 94. Support frame; 941. Support bearing; 95. Stirring paddle; 951. Stirring shaft; 96. Fixing pier; 97. Proximity switch; 98. Admixture tank; 99. Water tank; 100. Liquid delivery pump; and 102. Hydraulic control valve.

### DETAILED DESCRIPTION

The technical solutions of the present disclosure will be described clearly and completely below in combination with the accompanying drawings. Obviously, the described embodiments are part of the embodiments of the present disclosure, not all of them. Based on the embodiments of the present disclosure, all other embodiments obtained by those skilled in the art without creative efforts shall fall within the protection scope of the present disclosure.

In the description of the present disclosure, it should be noted that directional or positional relationships indicated by terms such as "center", "upper", "lower", "left", "right", "vertical", "horizontal", "inner" and "outer" are based on directional or positional relationships as shown in the accompanying drawings, and are only for the purposes of facilitating describing the present disclosure and simplifying the description, rather than indicating or implying that the referred apparatus or element has to have a specific direction or be constructed and operated in the specific direction, and therefore, they cannot be regarded as limitations to the present disclosure. In addition, the terms "first", "second" and "third" are only used to describe the purposes, and cannot be understood as indicating or implying relative importance.

In the description of the present disclosure, it should be noted that the terms "mounted", "connected" and "connection" should be understood in a broad sense unless otherwise specified and defined, for example, "connection" may be fixed connection or detachable connection or integrated connection, may be mechanical connection or electric connection, may be direct connection or indirect connection through an intermediate medium, or may be internal connection of two elements. For those ordinary skilled in the art, the specific meanings of the above terms in the present disclosure may be understood in specific situations.

In addition, the technical features involved in the different implementations of the present disclosure described below may be combined with each other as long as they do not conflict with each other.

### Embodiment 1

A 3D printing construction apparatus provided by the present disclosure includes: an operation structure, including a control room 10, a controller 101 being arranged in the control room 10; a printing arm structure 1, arranged on one side of the control room 10 and including a printing arm and a feed delivery pipe 6, the feed delivery pipe 6 being suitable for flowing of concrete or slurry; and a printing arm head structure, arranged at one end of the printing arm structure 1 away from the control room 10 and including an arm head 16 and a first rotating power part 17, wherein the first rotating power part 17 is in communication connection with the controller 101, a grouting nozzle 161 and a concrete printing nozzle 162 are arranged at two opposite ends of the arm head 16, diameters of the grouting nozzle 161 and the concrete printing nozzle 162 are different, concentrations and proportions of grouted slurry and concrete are also different, and the first rotating power part 17 drives the arm head 16 to rotate, so as to drive the grouting nozzle 161 or the concrete printing nozzle 162 to be in pipeline connection with the feed delivery pipe 6. When a rapid molding structure and a component need to be printed, the first rotating power part 17 drives the arm head 16 to rotate, the concrete printing nozzle 162 is in pipeline connection with the feed delivery pipe 6, concrete flows through the feed delivery pipe 6, such that the concrete printing nozzle 162 sprays the concrete to complete printing of the molding structure and the component; and when slurry needs to be grouted and filled, the first rotating power part 17 drives the arm head 16 to rotate, the grouting nozzle 161 is in pipeline connection with the feed delivery pipe 6, and the slurry flows through the feed delivery pipe 6, such that the grouting nozzle 161 sprays the slurry to complete printing of slurry grouting and filling occasions. Therefore, the problem that different materials cannot flow out of a 3D printing device is solved, so as to adapt to different printing occasions, and building printing models 22 of different sizes can be rapidly printed.

### Embodiment 2

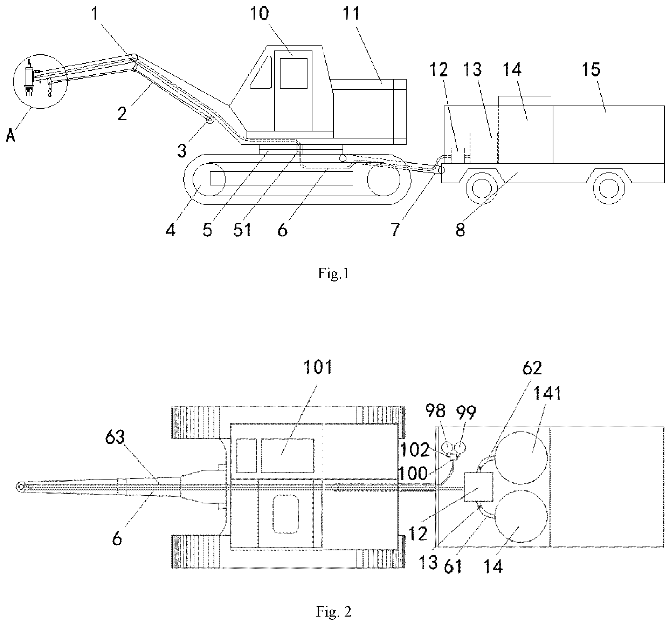

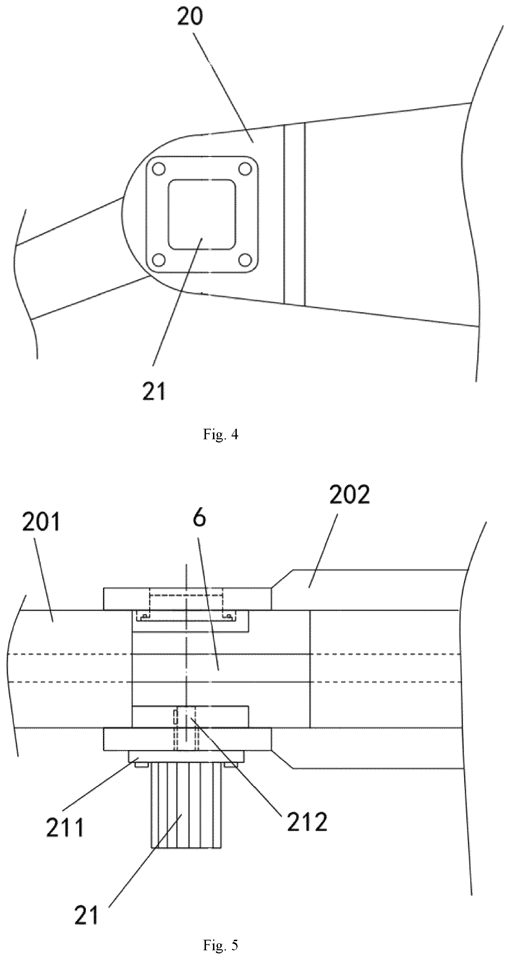

A specific implementation of a 3D printing construction apparatus as shown in Figs. 1-8 includes: a control structure provided with a control room 10, wherein a printing arm structure 1 and a trailer 8 are arranged at two opposite ends of the control room 10 respectively, a walking structure 4 is arranged below the control room 10, and a trailer rod 7 is connected between the walking structure 4 and the trailer 8.

As shown in Fig. 1, a controller 101 is arranged in the control room 10.

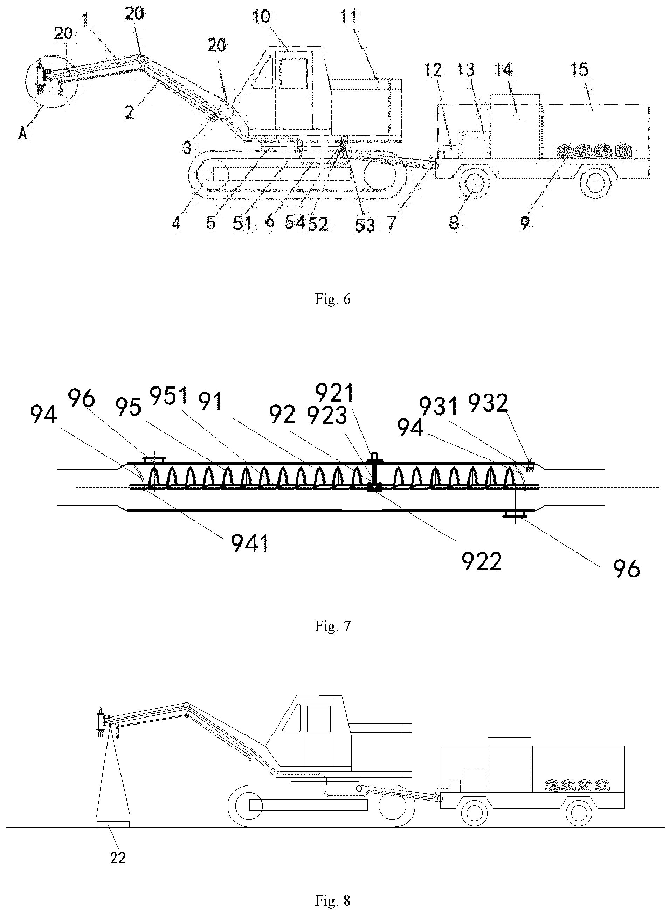

As shown in Figs. 1-6, the printing arm structure 1 includes a printing arm and a feed delivery pipe 6, wherein the printing arm is composed of two rotating joints 20, a second rotating power part 21 is arranged between the two rotating joints 20, the second rotating power part 21 is in communication connection with the controller 101, and the controller 101 controls the second rotating power part 21 to drive the adjacent rotating joints 20 to rotate relatively. Specifically, the second rotating power part 21 is a servo motor. As shown in Fig. 6, the rotating joints 20 are divided into a rotating arm front section 201 and a rotating arm rear section 202, the rotating arm front section 201 and the rotating arm rear section 202 are provided with ends, in contact with each other, at a connection position, a motor seat 211 of the second rotating power part 21 is fixedly connected with the rotating arm rear section 202, a motor shaft 212 of the second rotating power part 21 penetrates through a through hole of the rotating arm rear section 202 to be fixedly connected with the rotating arm front section 201, one end of the rotating arm rear section 202 facing away from the second rotating power part 21 is rotatably connected with the rotating arm front section 201, and the motor shaft 212 of the second rotating power part 21 drives the rotating arm front section 201 to perform rotational motion around the rotating arm rear section 202.

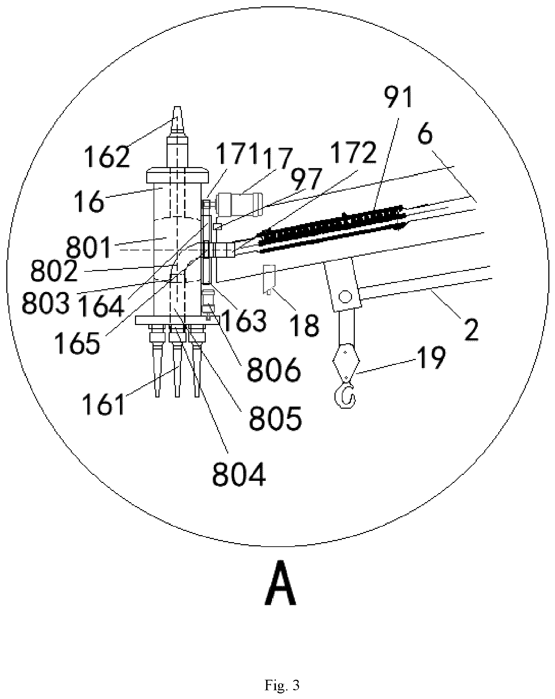

For the convenience of spraying a printing material, as shown in Fig. 1 and Fig. 3, the 3D printing construction apparatus further includes a printing arm head structure, the printing arm head structure is arranged at one end away from the control room 10, the printing arm head structure includes an arm head 16 and a first rotating power part 17, and the first rotating power part 17 is in communication connection with the controller 101. Specifically, the first rotating power part 17 is a servo motor. As shown in Fig. 3, a grouting nozzle 161 and a concrete printing nozzle 162 are arranged at two opposite ends of the arm head 16, and a grouting pipe 62 of the grouting nozzle 161 or a concrete pipe 61 of the concrete printing nozzle 162 is in pipeline connection with the feed delivery pipe 6, wherein a diameter of the concrete printing nozzle 162 is greater than that of the grouting nozzle 161, the quantity of the concrete printing nozzle 162 is 1, and the quantity of the grouting nozzle 161 is 3. In order to drive the arm head 16 to rotate, as shown in Fig. 3, the first rotating power part 17 is fixedly provided with a rotating end 171, the arm head 16 is provided with a force bearing end 164, and a transmission belt 163 is arranged between the rotating end 171 and the force bearing end 164. A rotation position of the arm head 16 is accurately determined through a proximity switch 97, and a brake apparatus of the rotating end 171 positions the arm head 16 at a printing position.

If only concrete or mortar is used as a material for 3D printing, it cannot meet requirements of diversified printing structures. Therefore, this patent adopts a design of matched use of two printing materials of the concrete and the mortar. As shown in Fig. 3 and Fig. 8, due to the different mix proportions of the concrete and the slurry, this patent has set up different material storage tanks and different printing nozzles, the material storage tanks are a concrete tank 14 and a mortar tank 141 respectively, and the nozzles are a concrete printing nozzle 162 and a grouting nozzle 161 respectively. In addition, 3D printing concrete should not only meet the requirements of rapid molding, that is, it should be rapidly condensed from the printing nozzle to be prevented from flowing around, but also meet a tight connection between layers of concrete without cold joints, and then 3D printing concrete components or structures are integrated. In addition, a situation that the concrete freely flows in the pipelines and the nozzles without blocking the pipeline and the nozzles further needs to be met. These three points require that the 3D printing concrete is different from traditional concrete, and its raw materials and quality requirements are also different. 3D printing in a factory may be performed in the way of stirring and using at any time, the stirring and using interval is short, a field-use stirring plant and the use aspects are often not in the same place, there is a problem that as the stirring and transportation time between the stirring and use is long, the concrete may have solidified or its performances are not suitable for printing when reaching the site, in order to meet these requirements, this patent sets a tail end adjusting apparatus of a stirring pipe 91, that is, water or additives such as an accelerator and an early strength agent are added before printing, in this way, the needs of long-distance transportation can be met, and the needs of 3D printing can also be met. As shown in Fig. 3 and Fig. 8, the stirring pipe 91 is connected with the feed delivery pipe 6 close to the arm head 16. A stirring paddle 95 and a stirring shaft 951 are arranged in the stirring pipe 91, the stirring shaft 951 is supported by support frames 94 at two ends, a driving structure 92 drives the stirring shaft 951 to stir, a nozzle 931 at a front end atomizes and adds the water or the additives such as the accelerator and the early strength agent, and the stirring pipe 91 is fixed to the printing arm through a fixing pier 96. As shown in Fig. 3, the stirring pipe 91 is connected with a feeding pipe 802 arranged in an arm head cavity 801 of the arm head 16 after being connected with a section of the feed delivery pipe 6, wherein the feeding pipe 802 is a section of short elbow, a head is a flexible joint 803 with a built-in spring to be movably and reliably connected with an arm head feeding channel 805, and slurry leakage during transportation or rotation is avoided, so that the concrete or the mortar enters the nozzle for concrete printing or grouting through the arm head feeding channel 805. At a position in the force bearing end 164 corresponding to the feeding pipe 802, an arm head bearing 165 is arranged on the feeding pipe 802 in a sleeving mode, the feeding pipe 802 is designed to be thickened and strengthened, and a front part is reliably fixed to the rotating arm front section 201, so as to ensure that the arm head 16 can reliably rotate relying on the arm head bearing 165 as a fulcrum when the feeding pipe 802 is fixed while supporting the weight of the arm head 16.

Both the concrete printing nozzle 162 and the grouting nozzle 161 may be set in the form of multiple nozzles, if the multiple nozzles are adopted, a nozzle opening and closing part 804 is arranged on each small nozzle, so as to control the participation of a single nozzle or the multiple nozzles, so that a width and thickness of printing or a speed of grouting is controlled, a rotary platform and a rotating power part 806 are arranged at a front end of the concrete printing nozzle 162, so as to adjust an angle and a direction of the nozzle in a printing process, thereby adjusting a path. A camera 18 is arranged below the rotating arm front section 201 to perform monitoring and operation adjusting on a working process.

As shown in Fig. 1 and Fig. 2, a trailer 8 is arranged at one end of the control room 10 facing away from the printing arm, the trailer 8 is provided with a trailer body 15, a delivery pump 12, a concrete tank 14, a mortar tank 141, a sequencing valve 13, an admixture tank 98, a water tank 99, a hydraulic control valve 102 and a liquid delivery pump 100 are arranged in the trailer body 15, the delivery pump 12 is in pipeline connection with the feed delivery pipe 6, the delivery pump 12 and the sequencing valve 13 are in signal connection with the controller 101 respectively, and the hydraulic control valve 102 and the liquid delivery pump 100 are in signal connection with the controller 101 respectively. The concrete tank 14 is in pipeline connection with the sequencing valve 13 through the concrete pipe 61, the mortar tank 141 is in pipeline connection with the sequencing valve 13 through the grouting pipe 62, the sequencing valve 13 is in pipeline connection with the delivery pump 12, and an output end of the delivery pump 12 is connected with the feed delivery pipe 6. Similarly, the admixture tank 98 and the water tank 99 are connected with the hydraulic control valve 102 respectively through pipelines, the hydraulic control valve 102 is in pipeline connection with the liquid delivery pump 100, and the liquid delivery pump 100 is connected with the nozzle 931 through the liquid delivery pipe 63. In addition to the delivery pipeline, a tow bar is further provided with a control line, so that a traction device can control the steering, braking and the like of the trailer.

In order to drive the control room 10 to rotate, as shown in Fig. 7, the rotary platform 5 is arranged at a top of the walking structure 4, a rotary hole and a cable hole 51 are formed in the rotary platform 5, a cable is arranged in the cable hole 51, a rotary bearing is arranged in the rotary hole, and the rotary bearing includes a rotary bearing inner ring and a rotary bearing outer ring, wherein the rotary bearing inner ring is fixedly connected with the control room 10, and the rotary bearing outer ring is fixedly connected with the walking structure 4. In order to drive the relative rotation of the walking structure 4 and the control room 10, the 3D printing construction apparatus further includes a power mechanism 11, the power mechanism 11 includes a rotary power part 54, the rotary power part 54 is arranged at a bottom of the control room 10, and a driving end of a power shaft 53 is engaged with an active driving gear 52 assembled outside the rotary platform 5 for driving. The power mechanism 11 not only provides walking power, but also provides power for a whole system of luffing and a lifting hook 19 of the printing structure 1, the liquid delivery pump 100, the delivery pump 12 and the like.

In order to hoist consumables of a stone wire mesh bag 9 required in a printing model 22, as shown in Fig. 1 and Fig. 3, the 3D printing construction apparatus further includes a hoisting structure, the hoisting structure includes a lifting hook 19, a wire rope 2 and a winch 3, wherein the lifting hook 19 is arranged below the rotating joint 20 of the printing arm close to the arm head 16, the winch 3 is arranged below the rotating joint 20 of the printing arm close to the control room 10, the wire rope 2 is connected between the lifting hook 19 and the winch 3, and the winch 3 is in communication connection with the controller 101.

In order to capture an image of the printing model 22 during printing, the 3D printing construction apparatus further includes a camera structure, the camera structure includes a camera 18, the camera 18 is arranged at a front end of the printing arm close to the arm head 16, and the camera 18 is in communication connection with the controller 101.

In a construction method based on a 3D printing construction apparatus, this patent may be used in concrete printing occasions such as road anti-collision piers, but not limited to such occasions. For convenience of explanation, the working principle and implementation steps of this patent are explained by taking printing an anti-collision pier as an example. It specifically includes the following steps:
(1) a concrete outer ring layer is printed. A rotary platform 5 of a printing arm structure is operated to rotate, so as to switch to a concrete printing nozzle 162, such that the concrete printing nozzle 162 rotates downwards. In a rotation process of an arm head 16, a feeding pipe 802 does not rotate, a spring is arranged in a flexible joint 803 of the feeding pipe 802, so that it can be tightly attached to an arc surface of an arm head cavity 801, and it is ensured that there is no slurry leakage, air leakage or liquid leakage. One or a plurality of nozzles are opened according to a printing width and thickness.
   An operation device injects concrete in a concrete tank 14 into a delivery pump 12 for delivery through a feed delivery pipe 6, and a pipeline passes through a pipeline and line outlet of the rotary platform 5 to deliver the concrete to the concrete printing nozzle 162 along a printing arm for outer ring printing of the anti-collision pier. A type and a mix proportion of the concrete to be printed are selected according to built-in software in the controller 101 of the control room 10, the built-in program may control a rotating speed of a stirring paddle 95 in a stirring pipe 91 after automatically and accurately calculating, at the same time, a type and the spray quantity of a liquid sprayed by a nozzle 931 are accurately controlled through a water control valve 932, the water or the liquids such as an accelerator and an early strength agent may be sprayed, the nozzle 931 is an atomizing nozzle to make the liquids be in uniform contact with the concrete, the concrete suitable for transportation is stirred into the concrete suitable for 3D printing through further stirring and fully mixing of the stirring paddle 95, the problem of aggregate separation that may occur during transportation and pipeline delivery may also be eliminated, the printing quality is further ensured, and a plurality of nozzles are configured according to the spray quantity. At the same time, the nozzle 931 is arranged at one end of the stirring pipe 91 away from the arm head, such that the water or an admixture is mixed with the concrete in the feed delivery pipe 6 after being added from a liquid delivery pipe 63, and then is fully stirred through the stirring paddle 95 subsequently, uniform fusion of the water or the admixture and the concrete is realized, and a variety of concrete with different performances is obtained through fusion of the amount of water added or the type of the admixture and the concrete. The stirring paddle 95 is driven by a driving part 921 of a driving structure 92, a planetary gear 923 is mounted at a front end of the driving part 921, and a disc gear 922 engaged with the planetary gear 923 is mounted at a corresponding position of the stirring shaft 951 for transmission. The stirring shaft 951 is fixed through support frames 94 arranged at front and rear ends, the support frames 94 are arc support frames 94 facing a delivery direction of the concrete, so as to better bear a delivery force in a delivery process of the concrete and keep overall stability during running, and the support frames 95 are connected with the stirring shaft 951 through support bearings 941. When a printing path needs to be adjusted in a different direction, the controller 101 controls a rotating power part 806 to adjust a direction of the printing nozzle, so as to adjust the printing path.
(2) A stone wire mesh bag 9 is put, the rotary platform 5 drives the printing arm to rotate, a lifting hook 19 hoists the stone wire mesh bag 9 to put into the anti-collision pier, and grouting is performed after filling a layer.
(3) The stone wire mesh bag 9 performs pressurizing for grouting, the first rotating power part 17 is operated to switch to a grouting nozzle 161 for grouting, at this time, an outlet of the feeding pipe 802 is in butt-joint with an inlet of the grouting nozzle 161, and then grouting may be started. After a layer of stones is filled, the grouting nozzle 161 is extended into a gap, since the nozzle is made of a flexible metal pipe, it may be moderately bent under the premise of ensuring strength to effectively extend into the gap, so as to ensure the grouting in place. A camera is mounted on the printing arm to observe a grouting effect to stop grouting or adjusting a grouting position. After a layer of grouting is completed, a second layer of stones is hoisted, and the problem that the grouting is not in place due to too-thick stone layers is avoided by multi-layer hoisting and layered grouting.

After the operation is completed, the working of the sequencing valve 13 and the delivery pump 12 is stopped until the operation reaches a next working position. Through the above steps, an overall strength that meets the requirements may be formed through the outer-ring concrete, the internal stones, a wire mesh and concrete mortar. Through this continuous construction method, the efficiency of construction is ensured, and the influence of process switching on efficiency is avoided.

According to the 3D printing construction apparatus and the construction method provided by the present disclosure, rapid and efficient printing is realized through the 3D apparatus, the problem of very low efficiency caused by manual stone masonry is well solved, and at the same time, the advantages of economy, simplicity, assembly line and automatic production are realized. The apparatus provided by the present application may conveniently move in a working region and automatically perform concrete printing through the built-in program, and it is suitable for being widely used in water and electricity, construction and other fields.

The present application has the following advantages in use:
(1) a traditional 3D concrete printing device is innovatively changed from being fixed to being movable, and is transferred from a factory to a construction site for use, so that a problem that the traditional 3D concrete printing device cannot be used on site is solved;
(2) an integration degree is high, concrete printing, construction material hoisting and grouting are integrated, a problem that the traditional 3D concrete printing device can only print a prefabricated formwork is solved, the scope of application is greatly expanded, labor costs are saved, and a construction efficiency is improved;
(3) the walking structure 4 may be a crawler type or a tire type, the construction under complex terrain conditions such as uneven ground may be met by adjusting the printing arm, and flexibility and reliability are realized;
(4) more use functions are realized, and the present application may be used for concrete printing, grouting, hoisting, hauling and the like separately; and
(5) the universality is high, and it may be used for the construction of various small reinforced concrete facilities, with a wide range of applications and high universality.

As an alternative implementation, the walking structure 4 of the platform may be the crawler type or the tire type.

As an alternative implementation, the first rotating power part 17 and the second rotating power part 21 may further be other types of motors besides the servo motor.

As an alternative implementation, the quantity of the concrete printing nozzle 162 may further be 2, 3 or more, and the quantity of the grouting nozzle 161 may further be 1, 2 or more.

As an alternative implementation, the rotating end 171 and the force bearing end 164 may be driven by means of gear engagement and the like in addition to being driven by the transmission belt.

Obviously, the above embodiments are only for the purpose of clearly explaining the examples, rather than limiting the implementations. For those ordinarily skilled in the art, other changes or variations in different forms may further be made on the basis of the above description. It is unnecessary and impossible to enumerate all the implementations here. However, the obvious changes or variations arising therefrom are still within the scope of protection as defined by the appended claims.

## Claims

1. A 3D printing construction apparatus, comprising:
an operation structure, comprising a control room (10), a controller (101) being arranged in the control room (10);
a printing arm structure (1), arranged on one side of the control room (10), the printing arm structure (1) comprising a printing arm and a feed delivery pipe (6), and the feed delivery pipe (6) being suitable for flowing of concrete or slurry; and
a printing arm head structure, arranged at one end of the printing arm structure (1) away from the control room (10), the printing arm head structure comprising an arm head (16)
chracterized in that
the printing arm head structure further comprises
a first rotating power part (17) in communication connection with the controller (101), a grouting nozzle (161) and a concrete printing nozzle (162) being arranged at two opposite ends of the arm head (16), wherein the diameters of the grouting nozzle (161) and the concrete printing nozzle (162) are different, the first rotating power part (17) being configured to drive the arm head (16) to rotate, so as to drive the grouting nozzle (161) or the concrete printing nozzle (162) to be in pipeline connection with the feed delivery pipe (6).

2. The 3D printing construction apparatus of claim 1, **characterized in that** a proximity switch (97) is arranged on the arm head (16), the proximity switch (97) is in communication connection with the controller (101), and the proximity switch (97) is configured to determine a rotation position of the arm head (16).

3. The 3D printing construction apparatus of claim 1, **characterized in that** the first rotating power part (17) is fixedly provided with a rotating end (171), the arm head (16) is provided with a force bearing end (164), a transmission belt (163) is arranged between the rotating end (171) and the force bearing end (164), and the rotating end (171) is configured to rotate to drive the arm head (16) to rotate.

4. The 3D printing construction apparatus of any one of claims 1 to 3, **characterized in that** the printing arm comprises at least two rotating joints (20), wherein a second rotating power part (21) is arranged between the rotating joints (20), and the second rotating power part (21) is in communication connection with the controller (101).

5. The 3D printing construction apparatus of claim 4, **characterized in** further comprising a trailer (8), wherein the trailer (8) is arranged at one end of the control room (10) facing away from the printing arm, the trailer (8) is provided with a trailer body (15), wherein a delivery pump (12), a concrete tank (14), a mortar tank (141), a sequencing valve (13), an admixture tank (98), a water tank (99), a hydraulic control valve (102) and a liquid delivery pump (100) are arranged in the trailer body (15), the delivery pump (12) is in pipeline connection with the feed delivery pipe (6), the delivery pump (12), the sequencing valve (13), the hydraulic control valve (102) and the liquid delivery pump (100) are in signal connection with the controller (101) respectively, the concrete tank (14) is in pipeline connection with the sequencing valve (13) through a concrete pipe (61), the mortar tank (141) is in pipeline connection with the sequencing valve (13) through a grouting pipe (62), the sequencing valve (13) is in pipeline connection with the delivery pump (12), an output end of the delivery pump (12) is connected with the feed delivery pipe (6), the admixture tank (98) and the water tank (99) are connected with the hydraulic control valve (102) respectively through a pipeline, the hydraulic control valve (102) is in pipeline connection with the liquid delivery pump (100), and the liquid delivery pump (100) is connected with a nozzle (931) through a liquid delivery pipe (63).

6. The 3D printing construction apparatus of claim 4, **characterized in that** a walking structure (4) is arranged below the control room (10), and the control room (10) is rotatably connected with the walking structure (4).

7. The 3D printing construction apparatus of claim 6 when dependent on claim 3, **characterized in** further comprising a stirring pipe (91) arranged close to the arm head (16) and connected with the feed delivery pipe (6), wherein a driving structure (92), a stirring paddle (95) and a stirring shaft (951) are arranged in the stirring pipe (91), wherein two ends of the stirring shaft (951) are connected with the stirring pipe (91) through supporting of a support frame (94), the driving structure (92) being configured to drive the stirring shaft (951) to stir, wherein one end of the stirring pipe (91) facing away from the arm head (16) is connected with the liquid delivery pipe (63), which is suitable for flowing of water or an additive, the stirring pipe (91) is fixed to the printing arm structure (1) through a fixing pier (96), a feeding pipe (802) is arranged in an arm head cavity (801) of the arm head (16), a pipe being arranged between the feeding pipe (802) and the stirring pipe (91), wherein a flexible joint (803) of the feeding pipe (802) is movably connected with an arm head feeding channel (805), such that the concrete or mortar may enter the nozzle for concrete printing or grouting through the arm head feeding channel (805), wherein the feeding pipe (802) is fixedly connected with a rotating arm front section (201), the feeding pipe (802) is connected with an arm head bearing (165) in a sleeve-like manner and the force bearing end (164) and the feeding pipe (802) are arranged correspondingly, so as to ensure that the arm head (16) can reliably rotate relying on the arm head bearing (165) as a fulcrum when the feeding pipe (802) is fixed while supporting the weight of the arm head (16), each of the grouting nozzle (161) and the concrete printing nozzle (162) being provided with a nozzle opening and closing part (804).

8. The 3D printing construction apparatus of claim 4, **characterized in** further comprising a hoisting structure, wherein the hoisting structure comprises a lifting hook (19), a wire rope (2) and a winch (3), the lifting hook (19) is arranged below the rotating joint (20) of the printing arm close to the arm head (16), the winch (3) is arranged below the rotating joint (20) of the printing arm close to the control room (10), the wire rope is connected between the lifting hook (19) and the winch (3), and the winch (3) is in communication connection with the controller (101).

9. The 3D printing construction apparatus of claim 4, **characterized in** further comprising a camera structure, wherein the camera structure comprises a camera (18), the camera (18) is arranged below the rotating joint (20) of the printing arm close to the arm head (16), and the camera (18) is in communication connection with the controller (101).

10. A 3D printing construction method using the 3D printing construction apparatus according to any one of claims 1-9, **characterized in that**, when a rapid molding structure and a component need to be printed, the first rotating power part (17) drives the arm head (16) to rotate, such that the concrete printing nozzle (162) is in pipeline connection with the feed delivery pipe (6), concrete flows through the feed delivery pipe (6), such that the concrete printing nozzle (162) sprays the concrete to complete printing of the molding structure and the component; and when slurry needs to be grouted and filled, the first rotating power part (17) drives the arm head (16) to rotate such that the grouting nozzle (161) is in pipeline connection with the feed delivery pipe (6), and the slurry flows through the feed delivery pipe (6), such that the grouting nozzle (161) sprays the slurry to complete printing of slurry grouting and filling occasions.

11. The 3D printing construction method according to claim 10, **characterized in** comprising the following steps:
1) printing of a concrete outer ring layer of an anti-collision pier by: operating a rotary platform (5) of the printing arm structure to rotate, so as to switch to the concrete printing nozzle (162), such that the concrete printing nozzle (162) rotates downwards, and opening one or a plurality of nozzle opening and closing parts (804) according to a printing width and thickness;
injecting concrete in a concrete tank (14) into a delivery pump (12) for delivery through the feed delivery pipe (6), wherein a pipeline passes through a pipeline and line outlet of the rotary platform (5) to deliver to the concrete printing nozzle (162) along the printing arm for outer ring printing of an anti-collision pier, wherein a built-in program of the controller (101) selects a type and a mix proportion of the concrete to be printed, the built-in program controls a rotating speed of a stirring paddle (95) in a stirring pipe (91), at the same time, a type and the spray quantity of a liquid sprayed by a nozzle (931) are controlled through a water control valve (932), the nozzle (931) sprays water or an additive, and then the water or additive is stirred and mixed by the stirring paddle (95) to prepare concrete to be printed, the nozzle (931) being arranged at one end of the stirring pipe (91) away from the arm head (16), so that the stirring paddle (95) can fully stir the concrete to be printed after adding the liquid, a driving part (921) of a driving structure (92) driving
the stirring paddle (95) to rotate, with a planetary gear (923) being arranged on the driving part (921), a disc gear (922) meshing with the planetary gear (923) being arranged on a stirring shaft (951), support frames (94) being arranged at two ends, arranged along an axis, of the stirring shaft (951) respectively, the support frames (94) being of arc structures, and a support bearing (941) being arranged between the support frames (94) and the stirring shaft (951), wherein when a printing path needs to be adjusted in a different direction, the controller (101) controls a rotating power part (806) to adjust a printing nozzle direction, so as to adjust the printing path;
(2) putting a stone wire mesh bag (9) into the anti-collision pier by: driving, by the rotary platform (5), the printing arm to rotate, hoisting the stone wire mesh bag (9) by a lifting hook (19), putting it into the anti-collision pier, and
(3) pressurizing by the stone wire mesh bag (9) for grouting by : controlling, by the controller (101), the first rotating power part (17) to switch to a grouting nozzle (161) for grouting, wherein a feeding pipe (802) is in butt-joint with the grouting nozzle (161) for grouting, the grouting nozzle (161) being made of a flexible metal pipe, wherein, after a layer of stones is filled, the grouting nozzle (161) is extended into a gap formed by the stones, the camera observes a grouting effect to stop grouting or adjusting a grouting position, and after a layer of grouting is completed, a second layer of stones is hoisted, so as to complete printing by multi-layer hoisting and layered grouting.

## Patentansprüche

1. Eine 3D-Druck-Bauvorrichtung, umfassend:
eine Betriebsstruktur, die einen Steuerraum (10) umfasst, wobei im Steuerraum (10) eine Steuerung (101) angeordnet ist;
eine Druckarmstruktur (1), die auf einer Seite des Steuerraums (10) angeordnet ist, wobei die Druckarmstruktur (1) einen Druckarm und ein Zufuhrrohr (6) umfasst, und das Zufuhrrohr (6) für den Fluss von Beton oder Schlamm geeignet ist; sowieeine
Druckarmkopfstruktur, die an einem Ende der Druckarmstruktur (1) entfernt vom Steuerraum (10) angeordnet ist, wobei die Druckarmkopfstruktur einen Armkopf (16) umfasst, **dadurch gekennzeichnet, dass** die Druckarmkopfstruktur ferner ein erstes Drehantriebsteil (17) umfasst, das mit der Steuerung (101) kommunikativ verbunden ist, und an zwei gegenüberliegenden Enden des Armkopfs (16) eine Einspritz Düse (161) und eine Betondruckdüse (162) angeordnet sind, wobei die Durchmesser der Einspritz Düse (161) und der Betondruckdüse (162) verschieden sind, und das erste Drehantriebsteil (17) konfiguriert ist, um den Armkopf (16) zum Drehen anzutreiben, um so die Einspritz Düse (161) oder die Betondruckd ü se (162) in Rohrleitungsverbindung mit dem Zufuhrrohr (6) zu bringen.

2. Die 3D-Druck-Bauvorrichtung nach Anspruch 1, **dadurch gekennzeichnet, dass** am Armkopf (16) ein Näherungsschalter (97) angeordnet ist, der mit der Steuerung (101) kommunikativ verbunden ist, und der Näherungsschalter (97) konfiguriert ist, um eine Drehposition des Armkopfs (16) zu bestimmen.

3. Die 3D-Druck-Bauvorrichtung nach Anspruch 1, **dadurch gekennzeichnet, dass** am ersten Drehantriebsteil (17) ein Drehende (171) fest angeordnet ist, am Armkopf (16) ein Kraftaufnahmende (164) vorgesehen ist, zwischen dem Drehende (171) und dem Kraftaufnahmende (164) ein Treibriemen (163) angeordnet ist, und das Drehende (171) konfiguriert ist, durch Drehen den Armkopf (16) zum Drehen anzutreiben.

4. Die 3D-Druck-Bauvorrichtung nach einem der Ansprüche 1 bis 3, **dadurch gekennzeichnet, dass** der Druckarm mindestens zwei Drehverbindungen (20) umfasst, wobei zwischen den Drehverbindungen (20) ein zweites Drehantriebsteil (21) angeordnet ist, und das zweite Drehantriebsteil (21) mit der Steuerung (101) kommunikativ verbunden ist.

5. Die 3D-Druck-Bauvorrichtung nach Anspruch 4, **dadurch gekennzeichnet, dass** sie ferner einen Anhänger (8) umfasst, wobei der Anhänger (8) an einem Ende des Steuerraums (10) abgewandt vom Druckarm angeordnet ist, und der Anhänger (8) einen Anhängerkörper (15) aufweist, in dem eine Förderpumpe (12), ein Betonbehälter (14), ein Mörtelbehälter (141), ein Sequenzventil (13), ein Zusatzmittelbehälter (98), ein Wasserbehälter (99), ein Hydrauliksteuerventil (102) und eine Flüssigkeitsförderpumpe (100) angeordnet sind. Die Förderpumpe (12) ist in Rohrleitungsverbindung mit dem Zufuhrrohr (6), und die Förderpumpe (12), das Sequenzventil (13), das Hydrauliksteuerventil (102) und die Flüssigkeitsförderpumpe (100) sind jeweils signalverbunden mit der Steuerung (101). Der Betonbehälter (14) ist über ein Betonrohr (61) in Rohrleitungsverbindung mit dem Sequenzventil (13), der Mörtelbehälter (141) über ein Einspritzrohr (62) in Rohrleitungsverbindung mit dem Sequenzventil (13), und das Sequenzventil (13) in Rohrleitungsverbindung mit der Förderpumpe (12). Ein Ausgangsende der Förderpumpe (12) ist mit dem Zufuhrrohr (6) verbunden. Der Zusatzmittelbehälter (98) und der Wasserbehälter (99) sind jeweils über eine Rohrleitung mit dem Hydrauliksteuerventil (102) verbunden, das Hydrauliksteuerventil (102) in Rohrleitungsverbindung mit der Flü ssigkeitsförderpumpe (100), und die Flüssigkeitsförderpumpe (100) über ein Flü ssigkeitszufuhrrohr (63) mit einer Düse (931) verbunden.

6. Die 3D-Druck-Bauvorrichtung nach Anspruch 4, **dadurch gekennzeichnet, dass** unterhalb des Steuerraums (10) eine Fahrstruktur (4) angeordnet ist, und der Steuerraum (10) drehbar mit der Fahrstruktur (4) verbunden ist.

7. Die 3D-Druck-Bauvorrichtung nach Anspruch 6, abhängig von Anspruch 3, **dadurch gekennzeichnet, dass** sie ferner ein Rührrohr (91) umfasst, das nahe dem Armkopf (16) angeordnet und mit dem Zufuhrrohr (6) verbunden ist, in dem Rührrohr (91) eine Antriebsstruktur (92), ein Rührflügel (95) und eine Rührwelle (951) angeordnet sind, wobei beide Enden der Rührwelle (951) über eine Abstützung durch einen Träger (94) mit dem Rührrohr (91) verbunden sind, die Antriebsstruktur (92) konfiguriert ist, um die Rührwelle (951) zum Rühren anzutreiben, wobei ein Ende des Rührrohrs (91) abgewandt vom Armkopf (16) mit dem Flüssigkeitszufuhrrohr (63) verbunden ist, das für den Fluss von Wasser oder einem Zusatzmittel geeignet ist, das Rührrohr (91) über einen Fixierpier (96) an der Druckarmstruktur (1) fixiert ist, in einem Armkopfkavität (801) des Armkopfs (16) ein Zufuhrrohr (802) angeordnet ist, zwischen dem Zufuhrrohr (802) und dem Rührrohr (91) eine Rohrleitung angeordnet ist, wobei ein flexibler Anschluss (803) des Zufuhrrohrs (802) beweglich mit einem Armkopf-Zufuhrkanal (805) verbunden ist, sodass Beton oder Mörtel durch den Armkopf-Zufuhrkanal (805) in die Düse für den Betondruck oder die Einspritzung eintreten kann, wobei das Zufuhrrohr (802) fest mit einem vorderen Abschnitt des Dreharms (201) verbunden ist, das Zufuhrrohr (802) hülsenartig mit einem Armkopf-Lager (165) verbunden ist und das Kraftaufnahmende (164) und das Zufuhrrohr (802) korrespondierend angeordnet sind, um sicherzustellen, dass der Armkopf (16) sich unterstützend auf das Gewicht des Armkopfs (16) und bei festem Zufuhrrohr (802) zuverlässig unter Verwendung des Armkopf-Lagers (165) als Drehpunkt drehen kann, und an der Einspritzdüse (161) und der Betondruckdüse (162) jeweils ein Düsen-Öffnungs- und Schließteil (804) vorgesehen ist.

8. Die 3D-Druck-Bauvorrichtung nach Anspruch 4, **dadurch gekennzeichnet, dass** sie ferner eine Hebestruktur umfasst, wobei die Hebestruktur einen Haken (19), ein Seil (2) und eine Winde (3) umfasst, der Haken (19) unterhalb der Drehverbindung (20) des Druckarms nahe dem Armkopf (16) angeordnet ist, die Winde (3) unterhalb der Drehverbindung (20) des Druckarms nahe dem Steuerraum (10) angeordnet ist, das Seil zwischen dem Haken (19) und der Winde (3) verbunden ist, und die Winde (3) mit der Steuerung (101) kommunikativ verbunden ist.

9. Die 3D-Druck-Bauvorrichtung nach Anspruch 4, **dadurch gekennzeichnet, dass** sie ferner eine Kamerastruktur umfasst, wobei die Kamerastruktur eine Kamera (18) umfasst, die Kamera (18) unterhalb der Drehverbindung (20) des Druckarms nahe dem Armkopf (16) angeordnet ist, und die Kamera (18) mit der Steuerung (101) kommunikativ verbunden ist.

10. Ein 3D-Druck-Bauverfahren unter Verwendung der 3D-Druck-Bauvorrichtung nach einem der Ansprüche 1 bis 9, **dadurch gekennzeichnet, dass** wenn eine schnell zu formende Struktur und ein Bauteil gedruckt werden sollen, das erste Drehantriebsteil (17) den Armkopf (16) zum Drehen antreibt, sodass die Betondruckd üse (162) in Rohrleitungsverbindung mit dem Zufuhrrohr (6) gebracht wird, Beton durch das Zufuhrrohr (6) fließt, sodass die Betondruckdüse (162) den Beton verspritzt, um den Druck der formenden Struktur und des Bauteils abzuschließen; und wenn Schlamm eingespritzt und gefüllt werden soll, das erste Drehantriebsteil (17) den Armkopf (16) zum Drehen antreibt, sodass die Einspritzd ü se (161) in Rohrleitungsverbindung mit dem Zufuhrrohr (6) gebracht wird, und Schlamm durch das Zufuhrrohr (6) fließt, sodass die Einspritzdüse (161) den Schlamm verspritzt, um den Druck für Anwendungen der Schlamm-Einspritzung und -Füllung abzuschließen.

11. Das 3D-Druck-Bauverfahren nach Anspruch 10, **dadurch gekennzeichnet, dass** es folgende Schritte umfasst:
1) Druck einer Betonaußenringschicht eines Aufprallschutzes durch:
Betreiben der Drehung einer Drehplattform (5) der Druckarmstruktur, um auf die Betondruckdüse (162) umzuschalten, sodass die Betondruckdüse (162) nach unten dreht, und Öffnen eines oder mehrerer Düsen-Öffnungs- und Schließteile (804) gemäß einer Druckbreite und -dicke;
Einführen von Beton aus einem Betonbehälter (14) in eine Förderpumpe (12) zur Förderung durch das Zufuhrrohr (6), wobei eine Rohrleitung durch einen Rohr- und Leitungsausgang der Drehplattform (5) verläuft, um entlang des Druckarms zur Betondruckdüse (162) zu gelangen und den Außenringdruck des Aufprallschutzes durchzuführen, wobei ein eingebautes Programm der Steuerung (101) eine Art und eine Mischung des zu druckenden Betons auswählt, das eingebautes Programm eine Drehgeschwindigkeit eines Rührflügels (95) in einem Rührrohr (91) steuert, gleichzeitig eine Art und eine Sprühmenge einer von einer Düse (931) versprühten Fl üssigkeit über ein Wassersteuerventil (932) steuert, die Düse (931) Wasser oder ein Zusatzmittel verspritzt, und dann das Wasser oder Zusatzmittel durch den Rührflügel (95) gerührt und gemischt wird, um den zu druckenden Beton herzustellen, die Düse (931) an einem Ende des Rührrohrs (91) abgewandt vom Armkopf (16) angeordnet ist, sodass der Rührflügel (95) den zu druckenden Beton nach dem Hinzufügen der Flü ssigkeit vollständig rühren kann, ein Antriebsteil (921) einer Antriebsstruktur (92) den Rührflügel (95) zum Drehen antreibt, wobei am Antriebsteil (921) ein Planetengestell (923) angeordnet ist, an einer Rührwelle (951) ein Tellersatz (922) vorgesehen ist, der mit dem Planetengestell (923) kämmt, an beiden Enden der Rührwelle (951) entlang der Achse jeweils Träger (94) angeordnet sind, die Träger (94) eine Bogenstruktur aufweisen, und zwischen den Trägern (94) und der Rührwelle (951) ein Traglager (941) angeordnet ist, wobei wenn ein Druckpfad in einer anderen Richtung angepasst werden muss, die Steuerung (101) ein Drehantriebsteil (806) steuert, um eine Richtung der Druckdüse anzupassen, um so den Druckpfad anzupassen;
(2) Einbringen eines Steingitterbeutels (9) in den Aufprallschutz durch:
Antreiben der Drehung des Druckarms durch die Drehplattform (5), Heben des Steingitterbeutels (9) durch einen Haken (19) und Einbringen in den Aufprallschutz, und
(3) Druckbeaufschlagung durch den Steingitterbeutel (9) zur Einspritzung durch:
Steuern des ersten Drehantriebsteils (17) durch die Steuerung (101), um auf eine Einspritzdüse (161) umzuschalten und die Einspritzung durchzuführen, wobei ein Zufuhrrohr (802) mit der Einspritzdüse (161) zur Einspritzung verbunden ist, die Einspritzdüse (161) aus einem flexiblen Metallrohr hergestellt ist, wobei nachdem eine Schicht Steine gefüllt wurde, die Einspritzdüse (161) in einen Spalt eingebracht wird, der von den Steinen gebildet wird, die Kamera eine Einspritzwirkung beobachtet, um die Einspritzung zu stoppen oder eine Einspritzposition anzupassen, und nachdem eine Einspritzschicht abgeschlossen wurde, eine zweite Steinenschicht gehoben wird, um den Druck durch mehrschichtiges Heben und schichtweise Einspritzung abzuschließen.

## Revendications

1. Un appareil de construction par impression 3D, comprenant :
une structure de fonctionnement, comprenant un local de contrôle (10), un contrôleur (101) étant disposé dans le local de contrôle (10) ;
une structure de bras d'impression (1), disposée sur un côté du local de contrôle (10), la structure de bras d'impression (1) comprenant un bras d'impression et un tuyau d'alimentation (6), et le tuyau d'alimentation (6) étant adapté au flux du béton ou de la boue ;
etune structure de tête de bras d'impression, disposée à une extrémité de la structure de bras d'impression (1) éloignée du local de contrôle (10), la structure de tête de bras d'impression comprenant une tête de bras (16), **caractérisée en ce que** la structure de tête de bras d'impression comprend en outre un premier élément d'entraînement rotatif (17) en connexion de communication avec le contrôleur (101), une buse de gâchage (161) et une buse d'impression de béton (162) étant disposées à deux extrémités opposées de la tête de bras (16), les diamètres de la buse de gâchage (161) et de la buse d'impression de béton (162) étant différents, le premier élément d'entraînement rotatif (17) étant configuré pour entraîner la tête de bras (16) en rotation, de manière à amener la buse de gâchage (161) ou la buse d'impression de béton (162) en connexion de conduite avec le tuyau d'alimentation (6).

2. L'appareil de construction par impression 3D selon la revendication 1, **caractérisé en ce qu'**un interrupteur de proximité (97) est disposé sur la tête de bras (16), l'interrupteur de proximité (97) étant en connexion de communication avec le contrôleur (101), et l'interrupteur de proximité (97) étant configuré pour dé terminer une position de rotation de la tête de bras (16).

3. L'appareil de construction par impression 3D selon la revendication 1, **caractérisé en ce que** le premier élément d'entraînement rotatif (17) est pourvu fixement d'une extrémité rotative (171), la tête de bras (16) est pourvue d'une extrémité porteuse (164), une courroie de transmission (163) est disposée entre l'extrémité rotative (171) et l'extrémité porteuse (164), et l'extrémité rotative (171) étant configurée pour tourner et entraîner la tête de bras (16) en rotation.

4. L'appareil de construction par impression 3D selon l'une quelconque des revendications 1 à 3, **caractérisé en ce que** le bras d'impression comprend au moins deux articulations rotatives (20), un deuxième élément d'entraînement rotatif (21) étant disposé entre les articulations rotatives (20), et le deuxième élément d'entraînement rotatif (21) étant en connexion de communication avec le contrôleur (101).

5. L'appareil de construction par impression 3D selon la revendication 4, **caractérisé en ce qu'**il comprend en outre une remorque (8), la remorque (8) étant disposée à une extrémité du local de contrôle (10) opposée au bras d'impression, la remorque (8) étant pourvue d'un corps de remorque (15), une pompe de transport (12), un ré servoir de béton (14), un réservoir de mortier (141), une vanne de séquencement (13), un réservoir d'additif (98), un réservoir d'eau (99), une vanne de contrôle hydraulique (102) et une pompe de transport de liquide (100) étant disposés dans le corps de remorque (15), la pompe de transport (12) étant en connexion de conduite avec le tuyau d'alimentation (6), la pompe de transport (12), la vanne de sé quencement (13), la vanne de contrôle hydraulique (102) et la pompe de transport de liquide (100) étant respectivement en connexion de signal avec le contrôleur (101), le réservoir de béton (14) étant en connexion de conduite avec la vanne de sé quencement (13) par l'intermédiaire d'un tuyau de béton (61), le réservoir de mortier (141) étant en connexion de conduite avec la vanne de séquencement (13) par l'intermédiaire d'un tuyau de gâchage (62), la vanne de séquencement (13) é tant en connexion de conduite avec la pompe de transport (12), une extrémité de sortie de la pompe de transport (12) étant connectée au tuyau d'alimentation (6), le réservoir d'additif (98) et le réservoir d'eau (99) étant respectivement connectés à la vanne de contrôle hydraulique (102) par l'intermédiaire d'une conduite, la vanne de contrôle hydraulique (102) étant en connexion de conduite avec la pompe de transport de liquide (100), et la pompe de transport de liquide (100) étant connecté e à une buse (931) par l'intermédiaire d'un tuyau d'alimentation en liquide (63).

6. L'appareil de construction par impression 3D selon la revendication 4, **caractérisé en ce qu'**une structure de déplacement (4) est disposée sous le local de contrôle (10), et le local de contrôle (10) étant en connexion rotative avec la structure de dé placement (4).

7. L'appareil de construction par impression 3D selon la revendication 6, dépendante de la revendication 3, **caractérisé en ce qu'**il comprend en outre un tuyau de mé lange (91) disposé à proximité de la tête de bras (16) et connecté au tuyau d'alimentation (6), une structure d'entraînement (92), une hélice de mélange (95) et un arbre de mélange (951) étant disposés dans le tuyau de mélange (91), les deux extrémités de l'arbre de mélange (951) étant connectées au tuyau de mélange (91) par le support d'un cadre de support (94), la structure d'entraînement (92) étant configurée pour entraîner l'arbre de mélange (951) en rotation pour mélanger, une extrémité du tuyau de mélange (91) opposée à la tête de bras (16) étant connecté e au tuyau d'alimentation en liquide (63) (adapté au flux de l'eau ou d'un additif), le tuyau de mélange (91) étant fixé à la structure de bras d'impression (1) par l'interm édiaire d'un pilier de fixation (96), un tuyau d'alimentation (802) étant disposé dans une cavité de tête de bras (801) de la tête de bras (16), une conduite étant disposée entre le tuyau d'alimentation (802) et le tuyau de mélange (91), un raccord flexible (803) du tuyau d'alimentation (802) étant connecté de manière mobile à un canal d'alimentation de tête de bras (805), de telle sorte que le béton ou le mortier peut entrer dans la buse pour l'impression de béton ou le gâchage par l'intermédiaire du canal d'alimentation de tête de bras (805), le tuyau d'alimentation (802) étant connect é fixement à une section avant de bras rotatif (201), le tuyau d'alimentation (802) étant connecté à un roulement de tête de bras (165) de mani ère enveloppante et l'extrémité porteuse (164) et le tuyau d'alimentation (802) é tant disposés de manière correspondante, de manière à garantir que la tête de bras (16) peut tourner de manière fiable en s'appuyant sur le roulement de tête de bras (165) comme pivot lorsque le tuyau d'alimentation (802) est fixe, tout en supportant le poids de la tête de bras (16), la buse de gâchage (161) et la buse d'impression de b éton (162) étant respectivement pourvues d'un élément d'ouverture et de fermeture de buse (804).

8. L'appareil de construction par impression 3D selon la revendication 4, **caractérisé en ce qu'**il comprend en outre une structure de levage, la structure de levage comprenant un crochet de levage (19), un câble d'acier (2) et un treuil (3), le crochet de levage (19) étant disposé sous l'articulation rotative (20) du bras d'impression à proximité de la tête de bras (16), le treuil (3) étant disposé sous l'articulation rotative (20) du bras d'impression à proximité du local de contrôle (10), le câble d'acier étant connecté entre le crochet de levage (19) et le treuil (3), et le treuil (3) étant en connexion de communication avec le contrôleur (101).

9. L'appareil de construction par impression 3D selon la revendication 4, **caractérisé en ce qu'**il comprend en outre une structure de caméra, la structure de caméra comprenant une caméra (18), la caméra (18) étant disposée sous l'articulation rotative (20) du bras d'impression à proximité de la tête de bras (16), et la caméra (18) étant en connexion de communication avec le contrôleur (101).

10. Un procédé de construction par impression 3D utilisant l'appareil de construction par impression 3D selon l'une quelconque des revendications 1 à 9, **caractérisé en ce que**, lorsqu'une structure et un composant à moulage rapide doivent être imprimés, le premier élément d'entraînement rotatif (17) entraîne la tê te de bras (16) en rotation, de manière à amener la buse d'impression de béton (162) en connexion de conduite avec le tuyau d'alimentation (6), le béton s'écoulant à travers le tuyau d'alimentation (6), de telle sorte que la buse d'impression de bé ton (162) projette le béton pour terminer l'impression de la structure et du composant à moulage ; et lorsqu'il faut gâcher et remplir de la boue, le premier élé ment d'entraînement rotatif (17) entraîne la tête de bras (16) en rotation, de manière à amener la buse de gâchage (161) en connexion de conduite avec le tuyau d'alimentation (6), et la boue s'écoulant à travers le tuyau d'alimentation (6), de telle sorte que la buse de gâchage (161) projette la boue pour terminer l'impression dans les cas de gâchage et de remplissage de boue.

11. Le procédé de construction par impression 3D selon la revendication 10, caracté risé en ce qu'il comprend les étapes suivantes :
1) Impression d'une couche annulaire externe en béton d'un poteau anti-collision par :
la commande de la rotation d'une plateforme rotative (5) de la structure de bras d'impression, de manière à passer à la buse d'impression de béton (162), de telle sorte que la buse d'impression de béton (162) tourne vers le bas, et l'ouverture d'un ou plusieurs éléments d'ouverture et de fermeture de buse (804) selon une largeur et une épaisseur d'impression ;
l'injection du béton contenu dans un réservoir de béton (14) dans une pompe de transport (12) pour être transporté à travers le tuyau d'alimentation (6), une conduite passant par une sortie de conduite et de ligne de la plateforme rotative (5) pour être transportée jusqu'à la buse d'impression de béton (162) le long du bras d'impression, afin d'effectuer l'impression de la couche annulaire externe du poteau anti-collision, un programme intégrée du contrôleur (101) sélectionnant un type et une proportion de mélange du béton à imprimer, le programme intégrée commandant la vitesse de rotation d'une hélice de mélange (95) dans un tuyau de m élange (91), le type et la quantité de projection d'un liquide projeté par une buse (931) étant commandés par l'intermédiaire d'une vanne de contrôle d'eau (932), la buse (931) projetant de l'eau ou un additif, puis l'eau ou l'additif étant mélangé et agité par l'hélice de mélange (95) pour préparer le béton à imprimer, la buse (931) étant disposée à une extrémité du tuyau de mélange (91) éloignée de la tête de bras (16), de manière à ce que l'hélice de mélange (95) puisse mélanger complè tement le béton à imprimer après l'ajout du liquide, un élément d'entraînement (921) d'une structure d'entraînement (92) entraînant l'hélice de mélange (95) en rotation, un engrenage planétaire (923) étant disposé sur l'élément d'entraînement (921), un engrenage discoïdal (922) engrénant avec l'engrenage planétaire (923) é tant disposé sur un arbre de mélange (951), des cadres de support (94) étant respectivement disposés aux deux extrémités de l'arbre de mélange (951) le long de l'axe, les cadres de support (94) ayant une structure en arc, et un roulement de support (941) étant disposé entre les cadres de support (94) et l'arbre de mélange (951), lorsque le trajet d'impression doit être ajusté dans une direction différente, le contrôleur (101) commandant un élément d'entraînement rotatif (806) pour ajuster la direction de la buse d'impression, de manière à ajuster le trajet d'impression ;
2) Introduction d'un sac en filet métallique à pierres (9) dans le poteau anti-collision par :
l'entraînement de la rotation du bras d'impression par la plateforme rotative (5), le levage du sac en filet métallique à pierres (9) par un crochet de levage (19), son introduction dans le poteau anti-collision ; et
3) Pressurisation par le sac en filet métallique à pierres (9) pour le gâchage par :
la commande du premier élément d'entraînement rotatif (17) par le contrôleur (101) pour passer à une buse de gâchage (161) et effectuer le gâchage, un tuyau d'alimentation (802) étant en raccordement avec la buse de gâchage (161) pour le gâchage, la buse de gâchage (161) étant fabriquée en tube métallique flexible, après le remplissage d'une couche de pierres, la buse de gâchage (161) étant introduite dans un intervalle formé par les pierres, la caméra observant l'effet de gâchage pour arrêter le gâchage ou ajuster la position de gâchage, et après la fin d'une couche de gâchage, une deuxième couche de pierres étant levée, de manière à terminer l'impression par levage en couches multiples et gâchage par couches.
